# FASCICULE DE BREVET EUROPEEN

(11) **EP 0 371 869 B1**
(45) Date de publication et mention de la délivrance du brevet: **09.08.1995**
(21) Numéro de dépôt: 89403278.8
(22) Date de dépôt: 27.11.1989
(51) Int. Cl.: A01D 90/10, A01G 13/02

(54) **Dispositif de paillage pouvant également faire fonction de désilage et de distribution**
Vorrichtung zum Auslegen von Strohbedeckung, Entnehmen von Silage und Verteilung
Apparatus for depositing straw coverings, also capable of unloading silage and distributing

(30) Priorité: 28.11.1988 FR 8815514
(43) Date de publication de la demande: 06.06.1990
(73) Titulaire: AUDUREAU, F-85260 L'HERBERGEMENT (FR)
(72) Inventeur: Audureau, Jacques, F-85260 L'Herbergement (FR)
(74) Mandataire: Fruchard, Guy

(56) Documents cités:
- EP-A- 0 166 653
- DE-A- 2 328 455
- DE-C- 3 007 490
- FR-A- 2 170 813
- FR-A- 2 189 297
- FR-A- 2 555 402
- FR-A- 2 558 033
- GB-A- 937 382
- US-H- 988 005

## Description

La présente invention concerne un dispositif de paillage ayant de préférence, mais non nécessairement, une structure permettant de l'utiliser comme dispositif de désilage et de distribution de fourrage.

On connaît déjà des dispositifs de paillage, c'est-à-dire des dispositifs destinés à assurer une projection de paille sur le sol, par exemple pour former une litière pour des animaux ou encore pour recouvrir le sol d'une couche de paille destinée à protéger des cultures contre le froid ou contre des projections de boue lors d'une chute de pluie. On connaît en particulier du document EP-A-166.653 des dispositifs de pailage comportant un caisson, des moyens pour introduire une matière à distribuer dans le caisson et des moyens de déplacement de la matière dans le caisson vers un orifice d'où le produit à distribuer tombe par gravité. Ce dispositif ne peut donc effectuer une distribution que dans des conditions particulières et ne permet pas en particulier de relever le produit à distribuer au-dessus du niveau du caisson.

On connaît également du document GB-A-937.382 une machine de distribution de fourrage comportant des moyens de déplacement de la matière à distribuer vers une auge ayant un axe longitudinal s'étendant perpendiculairement à la direction de déplacement de la matière dans le caisson et dans laquelle est disposée une double vis d'archimède qui ramène le fourrage vers l'entrée d'une turbine d'éjection dont l'ouverture a son axe dirigé penpendiculairement à l'axe longitudinal de l'auge. Un tel dispositif ne permet pas une aspiration directe de la matière contenue dans l'auge par la turbine et implique un poids et une puissance consommée importants pour l'entraînement de la double vis d'archimède. De plus une telle disposition risque de provoquer un bourrage de la turbine en cas d'afflux de matière.

Par ailleurs, dans les dispositifs à turbine existants, l'épaisseur de la turbine s'ajoute généralement à la profondeur du caisson pour former un ensemble en porte à faux dans l'axe du tracteur. Ce porte à faux est généralement d'autant plus grand que le caisson comporte également un tambour de démélage disposé en arrière de la turbine a proximité immédiate de celle-ci afin de déméler les bottes de paille qui sont introduites dans le caisson et de permettre une introduction progressive de la paille dans la turbine sans créer de bourrage dans celle-ci. Afin d'éviter un câbrage du tracteur lorsque des bottes de paille de grandes dimensions sont introduites dans le caisson, il est donc généralement nécessaire de prévoir des dispositifs de paillage semi-portés, voire même des dispositifs portés.

Un but de la présente invention est de proposer un dispositif de paillage réalisant un porte à faux réduit tout en permettant une distribution efficace.

Un autre but de l'invention est de proposer un dispositif qui, si celà s'avère nécessaire, puisse être également utilisé pour effectuer le désilage et la distribution de matières ensilées.

En vue de la réalisation du but premier de l'invention, on propose un dispositif de paillage comportant un caisson , une turbine de distribution adjacente au caisson et ayant un orifice d'entrée tourné vers l'intérieur du caisson, une auge extérieure à la turbine s'étendant le long d'une partie au moins d'un côté du caisson et des moyens de déplacement de la matière dans le caisson pour amener la matière à disbribuer vers l'auge selon une direction perpendiculaire à l'axe longitudinal de l'auge, caractérisé en ce que l'orifice d'entrée de la turbine débouche à une extrémité de l'auge selon l'axe longitudinal de celle-ci.

Ainsi, une partie des éléments constitutifs du dispositif de paillage est reportée sur le côté de celui-ci et l'on diminue le porte à faux tendant à provoquer un câbrage du tracteur auquel le dispositif de paillage est attelé tout en réalisant une aspiration aisée de la matière contenue dans l'auge.

Selon une version avantageuse de l'invention, le dispositif de paillage comporte un organe de démélage adjacent à l'auge et à une extrémité correspondante des moyens de déplacement de la matière dans le caisson. Ainsi, l'ensemble des éléments assurant la distribution de la matière est reporté sur un côté du caisson et la dimension en porte à faux du caisson est réduite à la dimension juste nécessaire pour l'introduction d'une botte de matière à distribuer dans le caisson.

Selon un aspect avantageux de l'invention, le dispositif comporte des moyens de désilage pour introduire une matière à distribuer dans le caisson. Ainsi, le dispositif selon l'invention peut être utilisé non seulement pour le paillage mais également pour la distribution de matières ensilées.

Selon une caractéristique avantageuse de l'invention, le dispositif comporte un volet mobile fermant une ouverture latérale du caisson en regard d'une extrémité des moyens de déplacement de la matière dans le caisson. Ainsi, lorsque l'on souhaite éviter une projection de matière distribuée par la turbine de distribution, il suffit d'ouvrir le volet mobile et d'arrêter la turbine de distribution pour que la matière distribuée s'écoule par gravité sur le côté du caisson.

Selon une autre caractéristique avantageuse de l'invention, le volet mobile est formé par une partie de l'auge montée pour pivoter autour d'un axe parallèle à une direction longitudinale de l'auge. Ainsi, lors du pivotement du volet mobile pour dégager l'ouverture latérale du caisson, le volet mobile sert de rampe de distribution de la matière à distribuer.

D'autres caractéristiques et avantages de l'invention apparaîtront encore à la lecture de la description qui suit en liaison avec les dessins ci-joints parmi lesquels :
- la figure 1 est une vue en perspective de trois-quarts arrière d'un premier mode de réalisation du dispositif selon l'invention,
- la figure 2 est une vue en perspective de trois-quarts avant du dispositif de la figure 1.
- la figure 3 est une vue en coupe partielle du dispositif selon l'invention selon un plan vertical passant par la ligne III-III de la figure 2.
- la figure 4 est une vue analogue à celle de la figure 1 d'un second mode de réalisation de l'invention.
- la figure 5 est une vue analogue à celle de la figure 2 du second mode de réalisation selon l'invention.

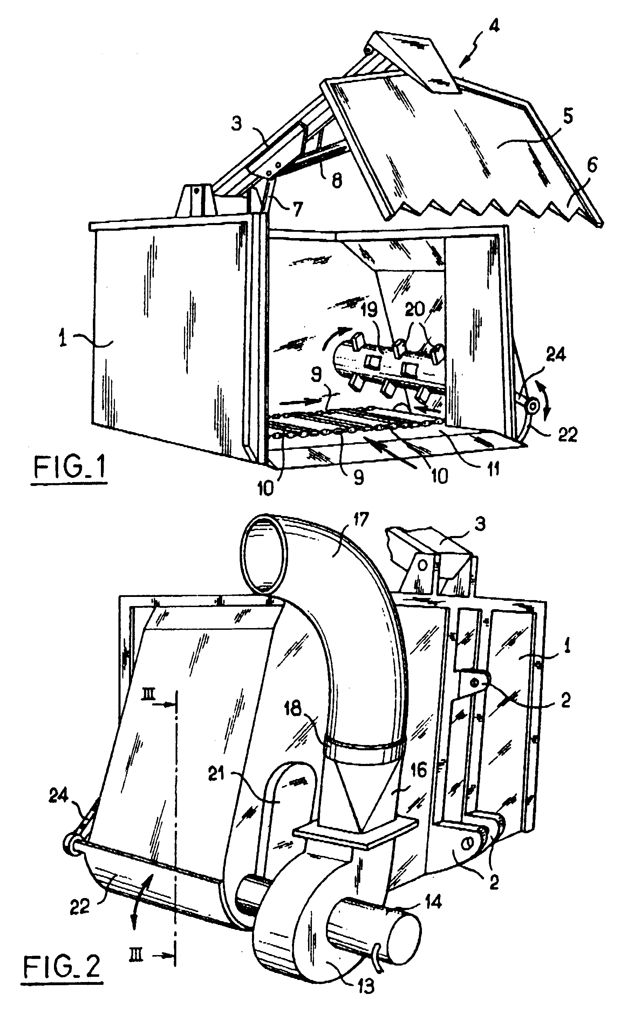

En référence aux figures 1 à 3, le dispositif selon l'invention comporte un caisson 1 dont la paroi avant est équipée de brides 2 de fixation à un tracteur (non représenté). A sa partie supérieure, la paroi avant du caisson 1 supporte un bras 3 monté pour pivoter par rapport au caisson et auquel sont fixés des moyens de désilage généralement désignés en 4 et comportant dans le cas présent un panneau 5 équipé le long de son bord inférieur de dents 6. La position du panneau 5 par rapport au caisson 1 est déterminée de façon habituelle par des vérins 7 et 8 dont seule la tige apparaît sur la figure 1 et qui sont respectivement montés de façon articulée entre le caisson 1 et le bras 3 d'une part, et entre le bras 3 et la plaque 5 d'autre part.

Des moyens de déplacement de matière dans le caisson, formés ici par deux boucles de chaîne 9 auxquelles sont associées des barres transversales 10, sont disposés sur le fond 11 du caisson pour déplacer la matière dans le caisson parallèlement à la paroi avant de celui-ci. A l'extrémité des moyens de déplacement de matière, le caisson comporte une auge 12 qui s'étend le long d'une partie du côté du caisson, l'axe longitudinal de l'auge s'étendant perpendiculairement à la paroi avant du caisson.

Par ailleurs, le dispositif selon l'invention comporte une turbine de distribution 13 entraînée par un moteur 14, par exemple un moteur hydraulique associé à une centrale hydraulique du tracteur, et dont l'orifice d'entrée 15 débouche à l'extrémité avant de l'auge 12. La turbine 13 est par exemple une turbine centrifuge dont le canal de sortie 16 s'étend perpendiculairement à l'axe de la turbine et est relié à une goulotte de distribution tubulaire coudée 17 par un raccord tournant 18 permettant d'orienter la goulotte de distribution 17 dans la direction souhaitée.

Un organe de démélage, par exemple un tambour rotatif 19 équipé de dents de démélage radiales 20, est de préférence disposé à l'intérieur du caisson de façon adjacente à l'auge et à une extrémité correspondante des moyens de déplacement de la matière dans le caisson. Dans le cas présent, le tambour de démélage est monté pour tourner autour d'un axe de rotation parallèle à l'axe longitudinal de l'auge 12. Le tambour de démélage 19 est entraîné en rotation de façon conventionnelle, par exemple au moyen d'un dispositif réducteur de vitesse disposé dans un carter 21 à l'avant du caisson et relié à la prise de force du tracteur.

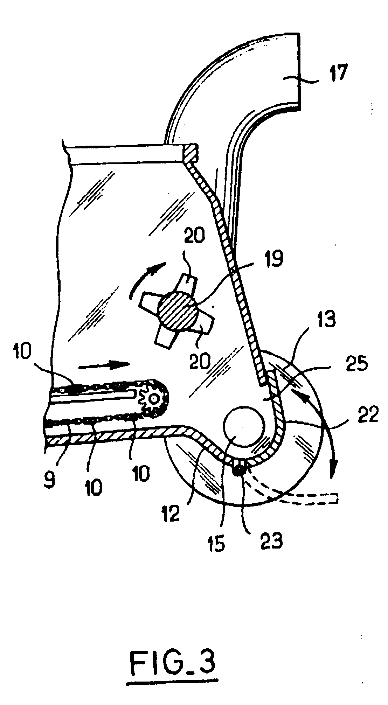

Selon un mode de réalisation illustré, le dispositif selon l'invention comporte également un volet mobile 22 formé par une partie de la paroi de l'auge montée pour pivoter autour d'un axe 23 parallèle à la direction longitudinale de l'auge. La position du volet mobile 22 est commandée par un vérin 24 dont on aperçoit seulement la tige sur les figures 1 et 2. Le volet 22 est ainsi mobile entre une position sensiblement verticale représentée en trait plein sur la figure 3 où il ferme une ouverture latérale 25 du caisson en regard de l'extrémité des moyens de déplacement de la matière dans le caisson et une position sensiblement horizontale représentée en pointillés sur la figure 3 dans laquelle il prolonge sensiblement la partie de paroi de l'auge à laquelle il est fixé.

Le fonctionnement du dispositif selon l'invention est le suivant : dans la fonction de paillage, le volet mobile 22 est maintenu fermé par le vérin 24 et une botte de paille est introduite dans le caisson 1. Les moyens de déplacement de la matière dans le caisson sont mis en route et entraînent la botte de paille vers le déméleur 19. La paille extraite de la botte par le déméleur 19 passe par dessus celui-ci et tombe dans l'auge 12 où elle est aspirée par la dépression créée par la turbine 13. La matière entraînée par la turbine 13 est projetée par la goulotte de distribution 17 dans la direction selon laquelle elle a été préalablement orientée.

Dans sa fonction de désilage, le panneau 5 est utilisé pour prélever de la matière ensilée et l'introduire dans le caisson. Si la matière ainsi introduite dans le caisson doit être simplement distribuée au niveau du sol, le volet mobile 22 est ouvert en actionnant le vérin 24 et il prend la position représentée en pointillés sur la figure 3. Simultanément la turbine 3 est arrêtée. En conséquence, la matière amenée par les barres 10 ou par le déméleur 19 glisse sur la paroi inclinée de l'auge 12 puis sur le prolongement que constitue le volet mobile 22 et atteint directement le sol. La hauteur de distribution peut être modifiée en agissant sur l'orientation du volet 22.

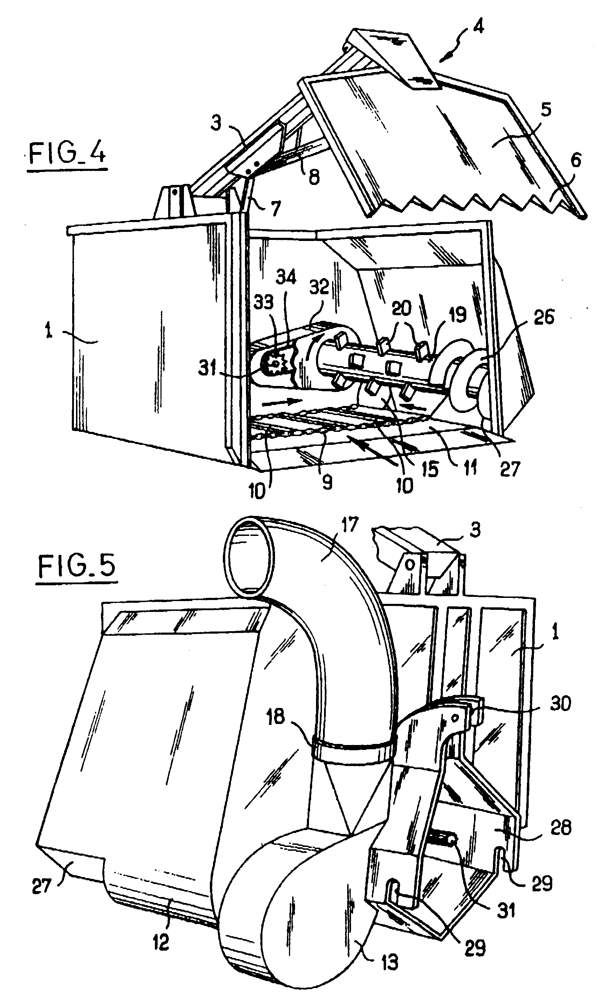

Dans le mode de réalisation des figures 4 et 5, l'organe de démélage comporte, à son extrémité opposée à l'orifice d'entrée 15, un tronçon de vis d'Archimède 26 réalisé à partir d'une tôle hélicoïdale fixée sur le tambour rotatif 19. La vis d'Archimède 26 est disposée pour pousser la matière à distribuer vers l'auge 12. En regard du tronçon de vis d'Archimède 26 le caisson comporte une partie de cloison inclinée 27 tournée vers le tronçon de vis d'Archimède 26. Ainsi, tout en réalisant une auge assez courte pour que celle-ci soit convenablement mise en dépression par la turbine, on amène la matière à distribuer vers la turbine quel que soit le volume de matière initialement contenu dans le caisson.

Dans ce second mode de réalisation les moyens de fixation comprennent un cadre support 28 polygonal en tôle épaisse pliée fixé, par exemple par soudage, à l'avant du caisson et comportant des encoches 29 à sa partie inférieure et une tige transversale 30 à sa partie supérieure pour une fixation rapide à un dispositif de fixation à trois points d'un tracteur. Le cadre support 28 entoure un arbre moteur cannelé 31 destiné à être relié à la prise de force du tracteur. L'arbre moteur 31 est de préférence disposé sensiblement suivant l'axe d'équilibre des poids du dispositif et débouche sur la face avant du caisson. L'arbre moteur 31 traverse la paroi avant du caisson et débouche à son extrémité arrière dans un carter 32 entourant des moyens de transmission du mouvement au tambour rotatif 19 et à la turbine 13 dont l'axe d'entraînement débouche cette fois vers l'intérieur du caisson. Dans le mode de réalisation illustré les moyens de transmission comprennent un pignon 32 porté par l'arbre moteur 31 et relié à des pignons entraînés (non représentés) à l'extrémité du tambour rotatif 19 et de l'axe de la turbine 13 par un organe de transmission tel qu'une chaine 34. On réalise ainsi un ensemble d'entraînement particulièrement compact en prise directe avec la prise de force du tracteur et minimisant donc tant le porte à faux du dispositif que sa consommation de puissance. Si on le préfère, le carter 32 et les éléments qu'il contient peut bien entendu être disposé à l'extérieur du caisson.

Bien entendu l'invention n'est pas limitée aux modes de réalisation décrits et on peut y apporter des variantes de réalisation sans sortir du cadre de l'invention. En particulier, lorsque l'on envisage d'utiliser le dispositif selon l'invention seulement pour sa fonction de paillage on peut prévoir une auge dont les parois sont fixes. On peut également dans ce cas prévoir des moyens d'introduction formés par une porte basculante articulée le long d'un axe horizontal monté à la partie inférieure de l'ouverture arrière du caisson. Dans ce cas on peut encore prévoir de disposer l'auge le long du côté avant du caisson, la turbine étant disposée à une extrémité de l'auge avec son axe disposé selon l'axe longitudinal de l'auge.

On peut également utiliser différents moyens de désilage pour charger le caisson, par exemple une turbine rotative disposée à l'extrémité d'un bras de chargement. En plus du volet mobile 22, ou en remplacement de celui-ci, on peut enfin prévoir un volet de distribution disposé sur un côté du caisson opposé à l'auge 12. Dans ce cas, la matière est amenée à l'auge 12 ou au volet de distribution simplement en inversant le sens de mouvement des barres 10.

## Revendications

1. Dispositif de paillage comportant un caisson (1), une turbine de distribution (13) adjacente au caisson et ayant un orifice d'entrée (15) tourné vers l'intérieur du caisson, une auge (12) extérieure à la turbine s'étendant le long d'une partie au moins d'un côté du caisson et des moyens de déplacement (9,10) de la matière dans le caisson pour amener la matière à distribuer vers l'auge (12) selon une direction perpendiculaire à l'axe longitudinal de l'auge, caractérisé en ce que l'orifice d'entrée (15) de la turbine débouche à une extrémité de l'auge (12), selon l'axe longitudinal de celle-ci.

2. Dispositif selon la revendication 1, caractérisé en ce qu'il comporte un organe de démêlage (19) adjacent à l'auge (12) et à une extrémité correspondante des moyens de déplacement (9,10) de la matière dans le caisson.

3. Dispositif selon la revendication 2, caractérisé en ce qu'au voisinage d'une extrémité de l'organe de démêlage opposée à l'orifice d'entrée (15) de la turbine, l'organe de démêlage comporte un tronçon de vis d'Archimède (26).

4. Dispositif selon la revendication 3, caractérisé en ce qu'il comporte une partie de cloison inclinée (27) en regard du tronçon de vis d'Archimède et tournée vers le tronçon de vis d'Archimède (26).

5. Dispositif selon l'une des revendications 1 à 4 caractérisé en ce que la turbine est entraînée par un arbre moteur (31) disposé sensiblement dans l'axe du dispositif et débouchant sur la face avant du caisson (1).

6. Dispositif selon les revendications 2 et 5, caractérisé en ce que l'organe de démêlage (19) est également relié à l'arbre moteur (31).

7. Dispositif selon la revendication 5 ou la revendication 6, caractérisé en ce qu'il comporte un cadre support (28) en tôle pliée fixé sur la face avant du caisson et entourant l'arbre moteur (31).

8. Dispositif selon l'une quelconque des revendications 1 à 7 caractérisé en ce qu'il comporte des moyens de désilage (5,6) pour introduire une matière à distribuer dans le caisson.

9. Dispositif selon l'une des revendications 1 à 8, caractérisé en ce qu'il comporte un volet mobile (22) fermant une ouverture latérale (25) du caisson en regard d'une extrémité des moyens de déplacement (9, 10) de la matière dans le caisson.

10. Dispositif selon la revendication 9, caractérisé en ce que le volet mobile (22) est formé par une partie de l'auge montée pour pivoter autour d'un axe (23) parallèle à une direction longitudinale de l'auge.

## Claims

1. A mulching apparatus comprising a bin (1), a distribution turbine (13) adjacent to the bin and having an intake orifice (15) directed towards the interior of the bin, a trough (12) external to the turbine extending along a part at least of one side of the bin and means (9, 10) for displacement of the material in the bin to move the material to be distributed towards the trough (12) in a direction perpendicular to the longitudinal axis of the trough, characterised in that the intake orifice (15) of the turbine opens at one end of the trough (12) along the longitudinal axis thereof.

2. Apparatus according to claim 1 characterised in that it comprises a picking-out member (19) adjacent to the trough (12) and at a corresponding end of the means (9, 10) for displacement of the material in the bin.

3. Apparatus according to claim 2 characterised in that in the vicinity of an end of the picking-out member, which is opposite to the intake orifice (15) of the turbine, the picking-out member comprises an Archimedean screw portion (26).

4. Apparatus according to claim 3 characterised in that it comprises an inclined partition portion (27) facing the Archimedean screw portion and directed towards the Archimedean screw portion (26).

5. Apparatus according to one of claims 1 to 4 characterised in that the turbine is driven by a drive shaft (31) disposed substantially on the axis of the apparatus and issuing at the front face of the bin (1).

6. Apparatus according to claim 2 and 5 characterised in that the picking-out member (19) is also connected to the drive shaft (31).

7. Apparatus according to claim 3 or claim 6 characterised in that it comprises a support frame (28) of bent plate fixed on the front face of the bin and surrounding the drive shaft (31).

8. Apparatus according to any one of claims 1 to 7 characterised in that it comprises means (5, 6) for removing material from a silo for introducing a material to be distributed into the bin.

9. Apparatus according to one of claims 1 to 8 characterised in that it comprises a movable flap (22) closing a lateral opening (25) of the bin facing an end of the means (9, 10) for displacement of the material in the bin.

10. Apparatus according to claim 9 characterised in that the movable flap (22) is formed by a part of the trough mounted for pivotal movement about an axis (23) parallel to a longitudinal direction of the trough.

## Patentansprüche

1. Vorrichtung zum Verteilen von Streu, Viehfutter und dergleichen, umfassend ein Gehäuse (1), eine an das Gehäuse (1) anschließende Verteilerturbine (13) mit einer Eintrittsöffnung, (15), die dem Gehäuseinnenraum zugewandt ist, eine sich außerhalb der Turbine entlang mindestens einer Gehäuseseite erstreckende Rinne (12) und eine Einrichtung (9, 10) zum Fördern des Materials in dem Gehäuse, um das zu verteilende Material in einer zur Längsachse der Rinne senkrechten Richtung zu der Rinne (12) zu fördern, dadurch **gekennzeichnet**, daß die Eintrittsöffnung (15) der Turbine an einem Ende der Rinne (12) in Richtung der Längsachse derselben mündet.

2. Vorrichtung nach Anspruch 1, dadurch **gekennzeichnet**, daß sie ein Auflockerungsorgan (19) hat, das benachbart zur Rinne (12) und an einem entsprechenden Ende der Einrichtung (9, 10) zur Förderung des Materials in dem Gehäuse angeordnet ist.

3. Vorrichtung nach Anspruch 2, dadurch **gekennzeichnet**, daß nahe einem der Eintrittsöffnung (15) der Turbine entgegengesetzten Ende des Auflockerungsorgans dieses einen Abschnitt einer archimedischen Schraube (26) trägt.

4. Vorrichtung nach Anspruch 3, dadurch **gekennzeichnet**, daß sie einen Abschnitt einer geneigten Wand (27) hat, der dem Abschnitt der archimedischen Schraube (26) gegenüberliegt und diesem zugewandt ist.

5. Vorrichtung nach einem der Ansprüche 1 bis 4, dadurch **gekennzeichnet**, daß die Turbine durch eine Motorwelle (31) angetrieben wird, die im wesentlichen in der Achse der Vorrichtung angeordnet ist und an der Vorderseite des Gehäuses mündet.

6. Vorrichtung nach den Ansprüchen 2 und 5, dadurch **gekennzeichnet**, daß Auflockerungsorgan (19) ebenfalls mit der Motorwelle (31) verbunden ist.

7. Vorrichtung nach Anspruch 5 oder 6, dadurch **gekennzeichnet**, daß sie einen Trägerrahmen (28) aus gefalztem Blech umfaßt, der an der Vorderseite des Gehäuses befestigt ist und die Motorwelle (31) umgibt.

8. Vorrichtung nach einem der Ansprüche 1 bis 7, dadurch **gekennzeichnet**, daß er eine Einrichtung (5, 6) zum Abtragen von Silage und zum Einführen von zu verteilendem Material in das Gehäuse hat.

9. Vorrichtung nach einem der Ansprüche 1 bis 8, dadurch **gekennzeichnet**, daß sie eine bewegliche Klappe (22) hat, welche eine seitliche Gehäuseöffnung (25) abdeckt, die einem Ende der Einrichtung (9, 10) zum Fördern des Materials in dem Gehäuse gegenüberliegt.

10. Vorrichtung nach Anspruch 9, dadurch **gekennzeichnet**, daß die bewegliche Klappe (22) von einem Abschnitt der Rinne gebildet ist, der um eine zur Längsrichtung der Rinne parallele Achse (23) schwenkbar gelagert ist.
